# EUROPÄISCHE PATENTSCHRIFT

(11) **EP 2 069 996 B1**
(45) Veröffentlichungstag und Bekanntmachung des Hinweises auf die Patenterteilung: **03.06.2015**
(21) Anmeldenummer: 07786437.9
(22) Anmeldetag: 30.07.2007
(51) Int. Cl.: G06F 21/76

(54) **VERFAHREN UND VORRICHTUNG ZUM ERZEUGEN UND ZUFÜHREN VON KONFIGURATIONSDATEN FÜR BZW. IN EINE PROGRAMMIERBARE, INTEGRIERTE LOGIKSCHALTUNG**
METHOD AND APPARATUS FOR PRODUCING AND SUPPLYING CONFIGURATION DATA FOR OR TO A PROGRAMMABLE, INTEGRATED LOGIC CIRCUIT
PROCÉDER ET DISPOSITIF POUR GÉNÉRER ET ACHEMINER DES DONNÉES DE CONFIGURATION POUR OU DANS UN CIRCUIT LOGIQUE INTÉGRÉ PROGRAMMABLE

(30) Priorität: 26.09.2006 DE 102006045372
(43) Veröffentlichungstag der Anmeldung: 17.06.2009
(73) Patentinhaber: Rohde & Schwarz SIT GmbH, 12489 Berlin (DE)
(72) Erfinder: LÉGER, Sébastien, 71336 Waiblingen (DE)
(74) Vertreter: Körfer, Thomas
(86) Internationale Anmeldenummer: PCT/EP2007/006738
(87) Internationale Veröffentlichungsnummer: WO 2008/037314

(56) Entgegenhaltungen:
- US-A1- 2001 015 919
- US-A1- 2001 032 318
- US-A1- 2003 229 799
- US-B1- 7 058 177

## Beschreibung

Die Erfindung bezieht sich auf ein Verfahren zum Zuführen von verschlüsselten Konfigurationsdaten in eine programmierbare, integrierte Logikschaltung, auf eine Vorrichtung zur Durchführung des Verfahrens, auf ein Verfahren zum Erzeugen von für die Logikschaltung vorgesehenen Konfigurationsdaten sowie auf ein digitales Speichermedium, ein Computerprogramm und ein Computerprogramm-Produkt zur Ausführung der Verfahren. Eine gängige Implementierung eines Systems zum Steuern von beispielsweise einer Anlage oder eines Computers erfolgt durch eine entsprechende Konfigurierung einer frei programmierbaren Logikschaltung, welche auch als FPGA bezeichnet wird. FPGA steht als Abkürzung für den englischen Begriff "Field Programmable Gate Array". Ein FPGA ist eine elektronische Schaltung, deren Schaltfunktionen sich durch Konfigurierung ergeben, d.h. Programmierung von Schaltzellen und programmierbaren Verbindungen zwischen diesen Schaltzellen.

Eine FPGA-Konfiguration ist ein Standardverfahren zur Initialisierung von Geräten oder Komponenten. Es ist üblich, Prozessorelemente und digitale Peripheriekomponenten mit FPGAs zu realisieren. Die Konfiguration des FPGAs, insbesondere eines auf RAM basierendes FPGAs, mit Konfigurationsdaten wird von einem FPGA-externen Speicher in spezielle Speicherzellen des FPGAs geladen. Manche FPGA-Typen erlauben zusätzlich das Auslesen und das Wiederbeschreiben der Konfiguration auch von nur Teilen des FPGAs. Ein solches Wiederbeschreiben der Konfiguration wird als Rekonfiguration, im Falle von Teilen des FPGAs als partielle Rekonfiguration bezeichnet. Bei der partiellen Rekonfiguration wird der FPGA also teilweise umkonfiguriert, ohne dass von der Rekonfiguration nicht betroffene Teile des FPGAs berührt werden.

Die FPGA-Konfigurationsdaten beschreiben die internen Schaltfunktionen, d.h. das interne Design des FPGAs. Insbesondere bei einem auf RAM basierenden FPGA, welcher zur größten Familie aller FPGA-Typen zählt, sind die FPGA-Konfigurationsdaten in einem zum FPGA extern vorgesehenen Speicher abgelegt. Aufgrund dessen besteht die Gefahr eines unerwünschten Zugriffs auf die Konfigurationsdaten, da es anhand der Konfigurationsdaten beispielsweise möglich ist, mittels Reverse Engineering auf das interne Design des FPGAs zu schließen.

Aufgrund dessen ist es üblich, die Konfigurationsdaten verschlüsselt auf dem externen Speicher abzulegen und auch beim Laden der Konfigurationsdaten aus dem externen Speicher in den FPGA vor unerwünschtem Zugriff zu schützen.

In der Druckschrift EP 1 124 330 A2 ist ein Verfahren zum Schützen von Konfigurationsdaten vor unerwünschtem Zugriff offenbart. Dabei werden gemäß dem in EP 1 124 330 A2 offenbarten Verfahren die Konfigurationsdaten von extern in den FPGA geladen, im FPGA mittels einer Entschlüsselungseinheit und einer Konfigurationseinheit entschlüsselt und in einem FPGA-internen Konfigurationsspeicher abgelegt. Ein zu einem für die Entschlüsselung der Konfigurationsdaten erforderlichen Entschlüsselungsalgorithmus passender Schlüssel zur Aktivierung der Entschlüsselungseinheit wird von einem FPGA-internen Zufallsgenerator mit einem Zufallsalgorithmus erstellt und in einem Schlüsselspeicher abgelegt.

Beim dem Verfahren gemäß Druckschrift EP 1 124 330 A2 ist jedoch dem Hardware-Hersteller des FPGAs der im FPGA implementierte Zufallsalgorithmus bekannt. Somit kann der Hersteller durch Generierung des Schlüssels mit Hilfe des dem Hersteller bekannten Zufallsalgorithmus auf verschlüsselte Konfigurationsdaten, welche von einem Softwarehersteller programmiert wurden, zugreifen, diese entschlüsseln und fremdnutzen.

Der Erfindung liegt die Aufgabe zugrunde, ein Verfahren und eine Vorrichtung sowie ein digitales Speichermedium, ein Computerprogramm und ein Computerprogramm-Produkt, womit verschlüsselte Konfigurationsdaten besonders zuverlässig und besonders aufwandsarm einer programmierbaren, integrierten Logikschaltung zugeführt werden, und ein Verfahren sowie ein digitales Speichermedium, ein Computerprogramm und ein Computerprogramm-Produkt anzugeben, womit für die Logikschaltung vorgesehene Konfigurationsdaten technisch besonders einfach und besonders zügig erzeugbar sind.

Bezüglich der Verfahren wird die Aufgabe erfindungsgemäß gelöst durch die Merkmale der Ansprüche 1 und 16. Vorteilhafte Weiterbildungen sind Gegenstand der hierauf rückbezogenen Unteransprüche.

Bezüglich der Vorrichtung wird die Aufgabe erfindungsgemäß gelöst durch die Merkmale des Anspruchs 7. Vorteilhafte Weiterbildungen sind Gegenstand der hierauf rückbezogenen Unteransprüche.

Bezüglich des digitalen Speichermediums, der Computerprogramme und des Computerprogramm-Produkts wird die Aufgabe erfindungsgemäß gelöst durch die Merkmale der Ansprüche 18 bis 21.

So umfasst das erfindungsgemäße Verfahren zum Zuführen von verschlüsselten Konfigurationsdaten in eine programmierbare, integrierte Logikschaltung zunächst einen Verfahrensschritt, wobei unverschlüsselte Konfigurationsdaten in die Logikschaltung geladen werden, welche einen Algorithmus umfassen. Darauf folgend werden die verschlüsselten Konfigurationsdaten, welche für die zumindest teilweise Konfiguration der Logikschaltung vorgesehen sind, in die Logikschaltung übertragen und mittel des Algorithmus und eines Schlüssels, welcher zur Aktivierung des Algorithmus dient, entschlüsselt. Die entschlüsselten Konfigurationsdaten werden in der Logikschaltung abgelegt. Die Zufuhr des Schlüssels in die Logikschaltung erfolgt separat zu den verschlüsselten Konfigurationsdaten und separat zu den unverschlüsselten Konfigurationsdaten.

Die erfindungsgemäße Vorrichtung zur Durchführung des Verfahrens zum Zuführen der verschlüsselten Konfigurationsdaten in die Logikschaltung weist eine Ladeschnittstelle, worüber die unverschlüsselten Konfigurationsdaten und die verschlüsselten Konfigurationsdaten in die Logikschaltung geladen werden, und eine logikschaltungsexterne Schlüsselschnittstelle auf, womit eine Verbindung von außerhalb der Logikschaltung nach innerhalb der Logikschaltung zur separaten Zuführung des Schlüssels geschaltet wird. Des Weiteren weist die erfindungsgemäße Vorrichtung eine logikschaltungsinterne Schnittstelle auf, worüber die verschlüsselten Konfigurationsdaten nach der Entschlüsselung entschlüsselt innerhalb der Logikschaltung, insbesondere zur partiellen Rekonfiguration der Logikschaltung, abgelegt werden.

Das andere erfindungsgemäße Verfahren zum Erzeugen der für die programmierbare, integrierte Logikschaltung vorgesehenen Konfigurationsdaten umfasst zunächst die Erstellung der Konfigurationsdaten in einem dafür vorgesehenen Erzeugungsmodul. In einem darauf folgenden Verfahrenschritt werden die Konfigurationsdaten in zu verschlüsselnde Konfigurationsdaten, welche für die Konfiguration der Logikschaltung vorgesehen sind, und in unverschlüsselte Konfigurationsdaten aufgeteilt, welche den Algorithmus zur Verschlüsselung sowie zur Entschlüsselung der zu verschlüsselnden Konfigurationsdaten umfassen. Zusätzlich wird ein zu dem Algorithmus passender Schlüssel zur Aktivierung des Algorithmus für die Verschlüsselung und die Entschlüsselung der zu verschlüsselnden Konfigurationsdaten erzeugt. Durch Aktivierung des Algorithmus mittels des Schlüssels werden die zu verschlüsselnden Konfigurationsdaten verschlüsselt und der Schlüssel separat zu den unverschlüsselten, den Algorithmus umfassenden Konfigurationsdaten und zu den verschlüsselten Konfigurationsdaten außerhalb der Logikschaltung abgelegt.

Die mit der Erfindung erzielten Vorteile bestehen insbesondere darin, dass die verschlüsselten, das interne Design der Logikschaltung umfassenden Konfigurationsdaten vor fremdem und/oder unerwünschtem Zugriff nicht nur hinsichtlich des Endkunden, sondern auch in Bezug auf den Hersteller der Logikschaltungshardware besonders sicher und zuverlässig geschützt sind. Demnach ist also dem Hersteller der Logikschaltungshardware weder der Algorithmus noch der zum Algorithmus passende Schlüssel bekannt. Des Weiteren ist eine Aufbewahrung des Schlüssel und/oder des Algorithmus logikschaltungsintern nicht notwendig. Bei der Gefahr eines unerwünschten Zugriffs zur Entschlüsselung der verschlüsselten Konfigurationsdaten muss ferner lediglich der Schlüssel an der Logikschaltung entfernt und/oder gelöscht und nicht die gesamte Logikschaltung beschädigt oder zerstört werden.

Zudem ist eine Wahrscheinlichkeit einer unerwünschten Entschlüsselung der verschlüsselten Konfigurationsdaten durch einen Fremdnutzer aufgrund der separaten Aufbewahrung des Schlüssels und der unverschlüsselten Konfigurationsdaten, welche den Algorithmus umfassen, besonders gering. Da die verschlüsselten Konfigurationsdaten logikschaltungsintern entschlüsselt werden, ist die Wahrscheinlichkeit besonders gering, beim Laden der verschlüsselten Konfigurationsdaten in die Logikschaltung Zugriff zu entschlüsselten Daten zu erhalten, welche zu den verschlüsselten Konfigurationsdaten gehören. Darüber hinaus sind die erfindungsgemäßen Verfahren technisch besonders einfach ausführbar und die erfindungsgemäße Vorrichtung besonders aufwandsarm zu realisieren.

Gemäß vorteilhafter Ausgestaltung umfassen die unverschlüsselten Konfigurationsdaten Startanweisungen, welche zuerst in die Logikschaltung geladen werden, so dass die Logikschaltung zweckmäßigerweise zeitlich vor der Zuführung des Algorithmus und vor der Zuführung der verschlüsselten Konfigurationsdaten hochgefahren wird.

In zweckmäßiger Weiterbildung umfassen die unverschlüsselten Konfigurationsdaten Schlüsselanweisungen, welche vorzugsweise nach Zufuhr der unverschlüsselten Konfigurationsdaten in die Logikschaltung dazu dienen, die logikschaltungsexterne Schlüsselschnittstelle zu konfigurieren, worüber zweckmäßigerweise der Schlüssel der Logikschaltung zugeführt wird.

Um die Wahrscheinlichkeit eines unerwünschten Zugriffs auf die verschlüsselten Konfigurationsdaten zeitlich vor und/oder nach der Entschlüsselung besonders gering zu halten, wird die logikschaltungsexterne Schlüsselschnittstelle vorzugsweise lediglich während des Ladens des Schlüssels in die Logikschaltung geschaltet. Gemäß vorteilhafter Ausgestaltung wird die Schlüsselschnittstelle lediglich für den Zeitraum der eigentlichen Zuführung des Schlüssels geschaltet, so dass ein unerwünschter Zugriff auf die verschlüsselten Konfigurationsdaten auch während der Entschlüsselung der verschlüsselten Konfigurationsdaten vermieden wird.

Um die in der Logikschaltung entschlüsselten Konfigurationsdaten besonders zuverlässig vor einem unerwünschten Zugriff über die logikschaltungsexterne Schlüsselschnittstelle, über die Ladeschnittstelle und/oder eine andere Schnittstelle, welche eine Verbindung zwischen außerhalb und innerhalb der Logikschaltung herstellt, zu schützen, werden die entschlüsselten Konfigurationsdaten vorzugsweise über eine logikschaltungsinterne Schnittstelle, welche besonders zuverlässigen Schutz vor einem Zugriff von außerhalb der Logikschaltung bietet, in der Logikschaltung abgelegt. Die logikschaltungsinterne Schnittstelle wird über Befehle konfiguriert, welche zweckmäßigerweise in den unverschlüsselten Konfigurationsdaten hinterlegt sind.

Gemäß vorteilhafter Ausgestaltung ist logikschaltungsextern eine Konfigurationsspeichereinrichtung zum Ablegen der unverschlüsselten Konfigurationsdaten und/oder verschlüsselten Konfigurationsdaten vorgesehen. Vorzugsweise ist die Konfigurationsspeichereinrichtung zur Logikschaltung physikalisch getrennt vorgesehen. Zweckmäßigerweise ist die Konfigurationsspeichereinrichtung als Tabellenspeicher, vorzugsweise als programmierbarer Auslesespeicher (PROM) ausgeführt. Gemäß vorteilhafter Ausgestaltung werden die verschlüsselten Konfigurationsdaten und die unverschlüsselten Konfigurationsdaten separat in physikalisch getrennten Konfigurationsspeichereinrichtungen abgelegt.

Gemäß zweckmäßiger Weiterbildung ist die Logikschaltung als frei programmierbare Logikschaltung (FPGA) ausgeführt.

Um den Schlüssel logikschaltungsextern physikalisch getrennt zu den Konfigurationsdaten zu speichern, ist zweckmäßigerweise eine Schlüsselspeichereinrichtung vorgesehen, welche vorzugsweise mit der logikschaltungsexternen Schlüsselschnittstelle zum Laden des Schlüssels in die Logikschaltung koppelbar ist. Um bei der Gefahr eines unerwünschten Zugriffs auf den Schlüssel und/oder auf die Logikschaltung während der Zuführung des Schlüssels zur Aktivierung des Algorithmus ist die Schlüsselspeichereinrichtung löschbar ausgebildet. Dazu weist die Schlüsselspeichereinrichtung vorzugsweise eine Löschfunktion, insbesondere eine Schnelllöschfunktion, zur Löschung des Schlüssels auf. Die Löschfunktion ist zweckmäßigerweise manuell betätigbar und/oder automatisch über die Logikschaltung bei Gefahr eines unerwünschten Zugriffs auf den Schlüssel und/oder auf die in der Logikschaltung befindlichen, zu entschlüsselnden oder bereits zumindest teilweise entschlüsselten Konfigurationsdaten auslösbar.

In zweckmäßiger Weiterbildung unterscheidet sich der Schlüssel zur Verschlüsselung der zu verschlüsselnden Konfigurationsdaten von dem Schlüssel zur Entschlüsselung der verschlüsselten Konfigurationsdaten.

Nachfolgend wird ein Ausführungsbeispiel der Erfindung anhand einer Zeichnung näher erläutert. Darin zeigen:
- Fig. 1: in Prinzipdarstellung die Vorrichtung mit einer Logikschaltung, wobei unverschlüsselte Konfigurationsdaten von einer Konfigurationsspeichereinrichtung umfassend die unverschlüsselten Konfigurationsdaten und verschlüsselte Konfigurationsdaten in die Logikschaltung geladen werden;
- Fig. 2: in Prinzipdarstellung die Vorrichtung gemäß Fig. 1 mit der Logikschaltung umfassend einen Algorithmus zur Entschlüsselung der verschlüsselten Konfigurationsdaten und eine logikschaltungsinterne Schnittstelle;
- Fig. 3: in Prinzipdarstellung die Vorrichtung gemäß Fig. 1 mit der Logikschaltung mit einer logikschaltungsexternen Schlüsselschnittstelle, worüber ein Schlüssel zur Aktivierung des Algorithmus in die Logikschaltung geladen wird;
- Fig. 4: in Prinzipdarstellung die Vorrichtung gemäß Fig. 1 mit der Logikschaltung, wobei die verschlüsselten Konfigurationsdaten von der Konfigurationsspeichereinrichtung in die Logikschaltung geladen, mittels des mit dem Schlüssel aktivierten Algorithmus entschlüsselt und über die logikschaltungsinterne Schnittstelle zur partiellen Konfiguration der Logikschaltung in dieser abgelegt werden;
- Fig. 5: in Prinzipdarstellung die Vorrichtung gemäß Fig. 1 mit der Logikschaltung, wobei die entschlüsselten Konfigurationsdaten in der Logikschaltung abgelegt sind;
- Fig. 6: in Prinzipdarstellung ein Erzeugungsmodul zur Erzeugung von für die Logikschaltung vorgesehenen Konfigurationsdaten und zur Ablegung der Konfigurationsdaten in einem Konfigurationsdatensatz;
- Fig. 7: in Prinzipdarstellung das Erzeugungsmodul gemäß Fig. 6, wobei die Konfigurationsdaten in unverschlüsselte Konfigurationsdaten und die zu verschlüsselnde Konfigurationsdaten getrennt werden;
- Fig. 8A: in Prinzipdarstellung das Erzeugungsmodul gemäß Fig. 6 mit den im Konfigurationsdatensatz abgelegten, unverschlüsselten Konfigurationsdaten;
- Fig. 8B: in Prinzipdarstellung das Erzeugungsmodul gemäß Fig. 6, wobei die zu verschlüsselnden Konfigurationsdaten in einem neuen Konfigurationsdatensatz abgelegt werden und
- Fig. 9: in Prinzipdarstellung das Erzeugungsmodul gemäß Fig. 6, wobei die zu verschlüsselnden Konfigurationsdaten mittels eines Algorithmus und eines Schlüssels zur Aktivierung des Algorithmus verschlüsselt werden.

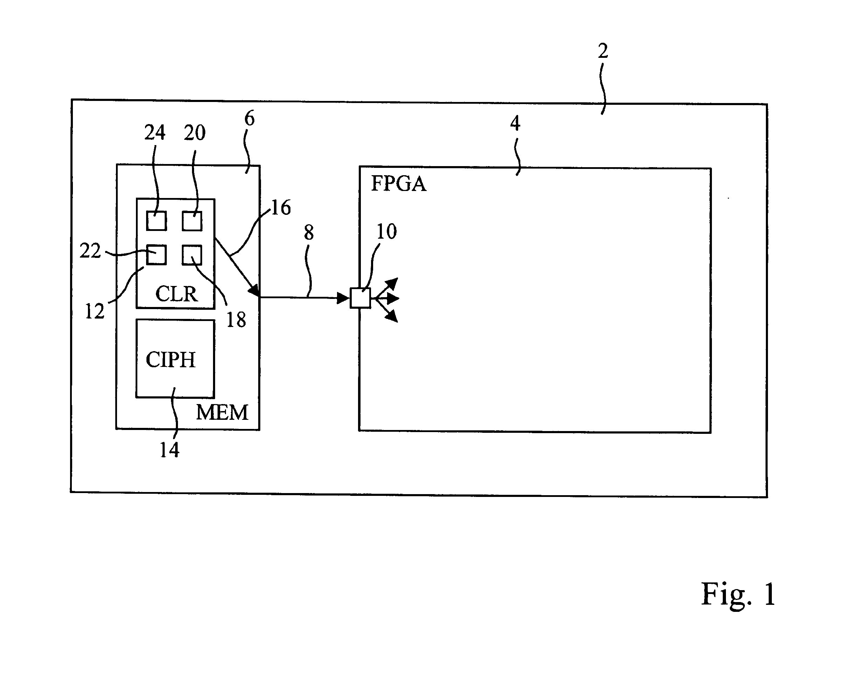

Die Figuren 1 bis 5 zeigen die einzelnen Verfahrensschritte des erfindungsgemäßen Verfahrens zum Zuführen von verschlüsselten Konfigurationsdaten in eine programmierbare, integrierte Logikschaltung.

Fig. 1 zeigt in Prinzipdarstellung eine Vorrichtung 2 mit einer Logikschaltung 4, welche im Ausführungsbeispiel als frei programmierbare Logikschaltung (FPGA) ausgeführt ist, mit einer Konfigurationsspeichereinrichtung 6, welche mit der Logikschaltung 4 über eine Signalleitung 8 und eine in der Logikschaltung 4 konfigurierte, logikschaltungsexterne Ladeschnittstelle 10 verbunden ist. Die logikschaltungsexterne Ladeschnittstelle 10 erzeugt eine Verbindung, wodurch der Logikschaltung 4 von außerhalb Daten zuführbar sind.

Die Konfigurationsspeichereinrichtung 6 umfasst unverschlüsselte Konfigurationsdaten 12 und verschlüsselte Konfigurationsdaten 14.

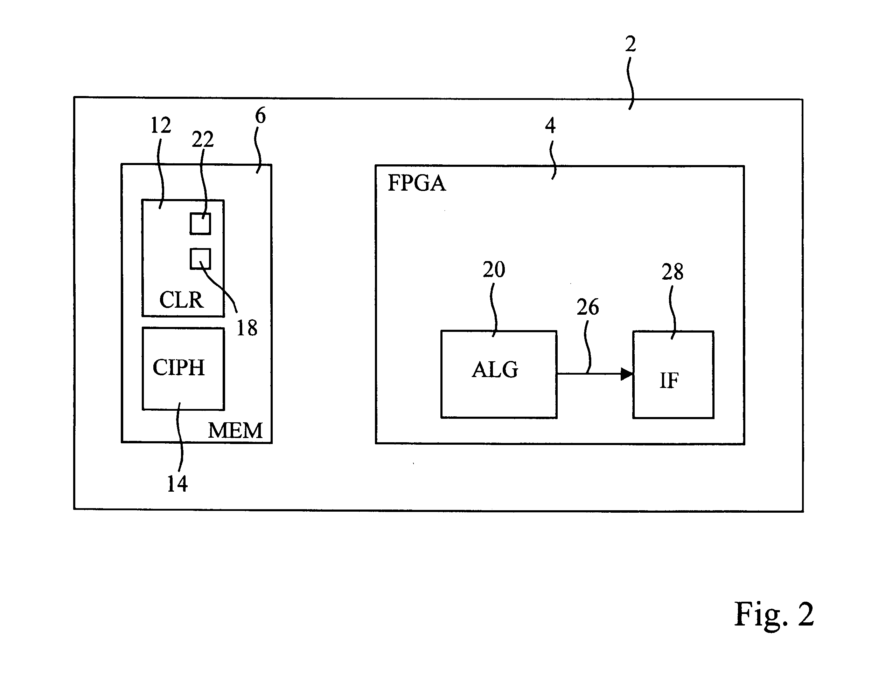

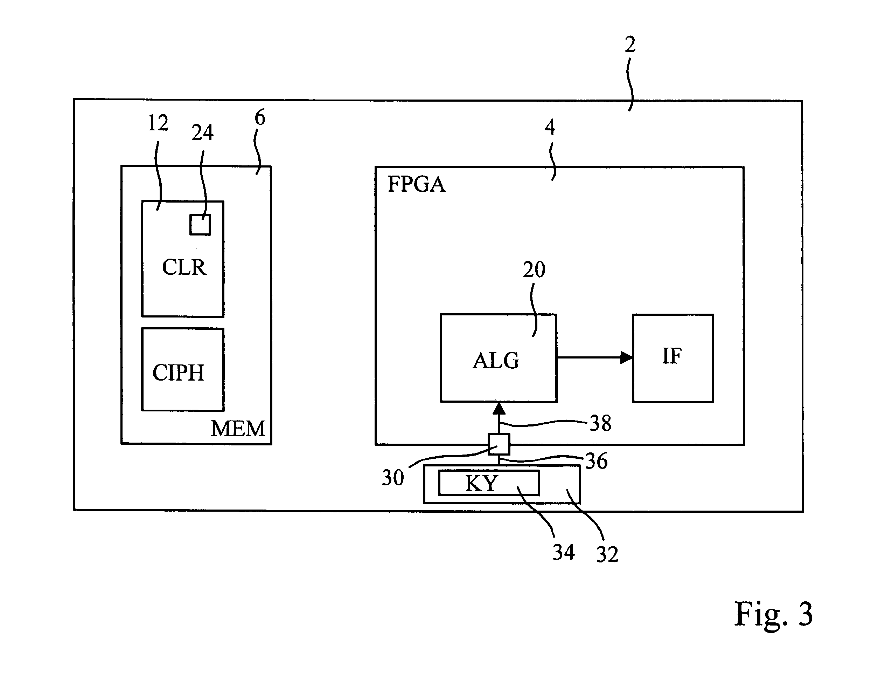

Zunächst werden die unverschlüsselten Konfigurationsdaten 12 über eine in der Konfigurationsspeichereinrichtung 6 vorgesehene Signalleitung 16, über die Signalleitung 8 und über die Ladeschnittstelle 10 der Logikschaltung 4 zugeführt. Die unverschlüsselten Konfigurationsdaten 12 umfassen im gezeigten Ausführungsbeispiel Startanweisungen 18, womit die Logikschaltung 4 hochgefahren wird, einen Algorithmus 20 zur Entschlüsselung der verschlüsselten Konfigurationsdaten 14, Befehle 22 zur Schaltung einer logikschaltungsinternen Schnittstelle, deren Funktion in der Beschreibung von Fig. 2 im Detail beschreiben ist, und Schlüsselanweisungen 24 zur Schaltung einer logikschaltungsexternen Schlüsselschnittstelle, welche in der Beschreibung für Fig. 3 im Detail beschrieben ist.

Fig. 2 zeigt die Vorrichtung 2 gemäß Fig. 1 in einem Zustand nach dem Laden der unverschlüsselten Konfigurationsdaten 12 in die Logikschaltung 4 mit der Konfigurationsspeichereinrichtung 6 und ohne die in Fig. 1 gezeigte Ladeschnittstelle, welche vorzugsweise lediglich für die Zuführung der unverschlüsselten Konfigurationsdaten 12 und für die Zufuhr der verschlüsselten Konfigurationsdaten 14 in die Logikschaltung 4 geschaltet ist.

Nach Hochfahren der Logikschaltung 4 ist der Algorithmus 20 zur Entschlüsselung der verschlüsselten Konfigurationsdaten in der Logikschaltung 4 bereit gestellt und über eine logikschaltungsinterne Signalleitung 26 mit der geschalteten, logikschaltungsinternen Schnittstelle 28 verbunden. Die logikschaltungsinterne Schnittstelle 28 wird mittels der in den unverschlüsselten Konfigurationsdaten 12 vorgesehenen Befehlen 22 geschaltet. Über die logikschaltungsinterne Schnittstelle 28 werden die mittels des Algorithmus 20 zu entschlüsselnden Konfigurationsdaten 14 logikschaltungsintern geschützt vor unerwünschtem Zugriff von außerhalb der Logikschaltung 4 abgelegt. Zweckmäßigerweise ist die logikschaltungsinterne Schnittstelle 28 lediglich für einen Zeitraum zur Ablegung der zu entschlüsselnden Konfigurationsdaten 14 geschaltet. Da die Logikschaltung 4 mittels der Startanweisungen 18 bereits hochgefahren, d.h. teilweise konfiguriert wurde, wird die Logikschaltung 4 mittels der zu entschlüsselnden Konfigurationsdaten 14 vorzugsweise partiell konfiguriert und/oder rekonfiguriert.

Fig. 3 zeigt die Vorrichtung 2 gemäß Fig. 1 mit der Logikschaltung 4 und der logikschaltungsexternen Schlüsselschnittstelle 30. Die Schlüsselschnittstelle 30 wird mittels den Schlüsselanweisungen 24, welche zusammen mit den unverschlüsselten Konfigurationsdaten 12 aus der Konfigurationsspeichereinrichtung 6 geladen wurden, für die Zuführung eines in einer Schlüsselspeichereinrichtung 32 abgelegten Schlüssels 34 in die Logikschaltung 4 geschaltet. Der Schlüssel 34 wird über eine Signalleitung 36, die logikschaltungsexterne Schlüsselschnittstelle 30 und eine logikschaltungsinterne Signalleitung 38 der Logikschaltung 4 zur Aktivierung des Algorithmus 20 zugeführt. Vorzugsweise dient die Schlüsselschnittstelle 30 lediglich zur Zuführung des Schlüssels 34. Zweckmäßigerweise ist die Schlüsselschnittstelle 30 lediglich für den Zeitraum der Zuführung des Schlüssels 34 geschaltet.

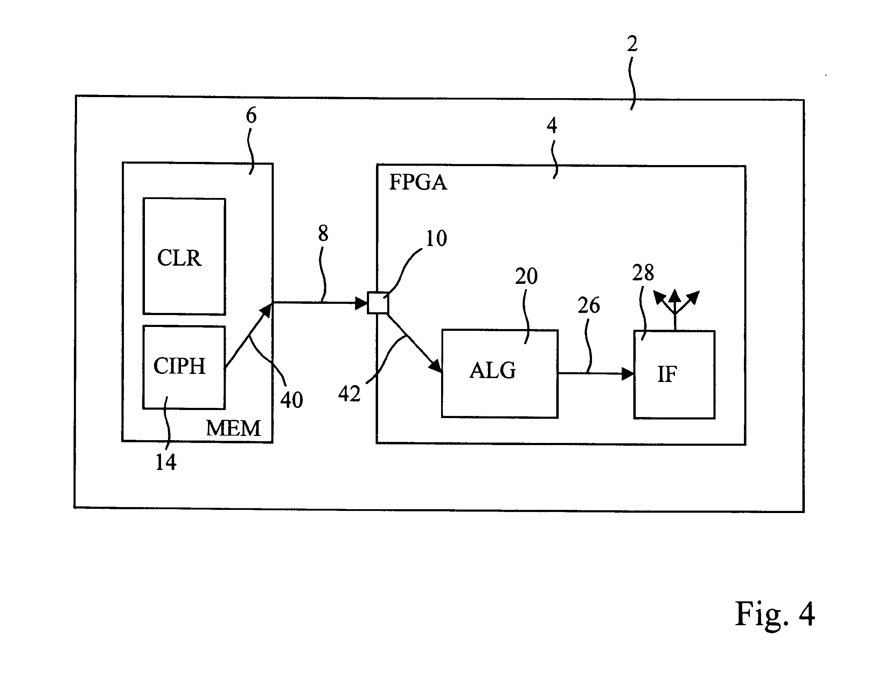

Fig. 4 zeigt in Prinzipdarstellung die Vorrichtung 2 gemäß Fig. 1 in einem Zustand nach dem Laden des Schlüssels (Fig. 3) über die Schlüsselschnittstelle (Fig. 3). Die verschlüsselten Konfigurationsdaten 14 werden aus der Konfigurationsspeichereinrichtung 6 über eine in der Konfigurationsspeichereinrichtung 6 vorgesehene Signalleitung 40, über die Signalleitung 8, die Ladeschnittstelle 10 und über eine logikschaltungsinterne Signalleitung 42 in die Logikschaltung 4 geladen. In der Logikschaltung 4 werden die verschlüsselten Konfigurationsdaten 14 mittels des aktivierten Algorithmus 20 entschlüsselt und über die logikschaltungsinterne Signalleitung 26 und die logikschaltungsinterne Schnittstelle 28 in der Logikschaltung 4 abgelegt. Die Schnittstelle 28 ist zweckmäßigerweise lediglich für den Zeitraum der Ablegung der entschlüsselten Konfigurationsdaten 14 geschaltet.

Da die verschlüsselten Konfigurationsdaten 14 erst logikschaltungsintern entschlüsselt werden, gibt es, insbesondere beim Laden der verschlüsselten Konfigurationsdaten 14 in die Logikschaltung 4, keine Möglichkeit eines Zugriffs auf unverschlüsselte Konfigurationsdaten, welche zu den verschlüsselten Konfigurationsdaten 14 gehören.

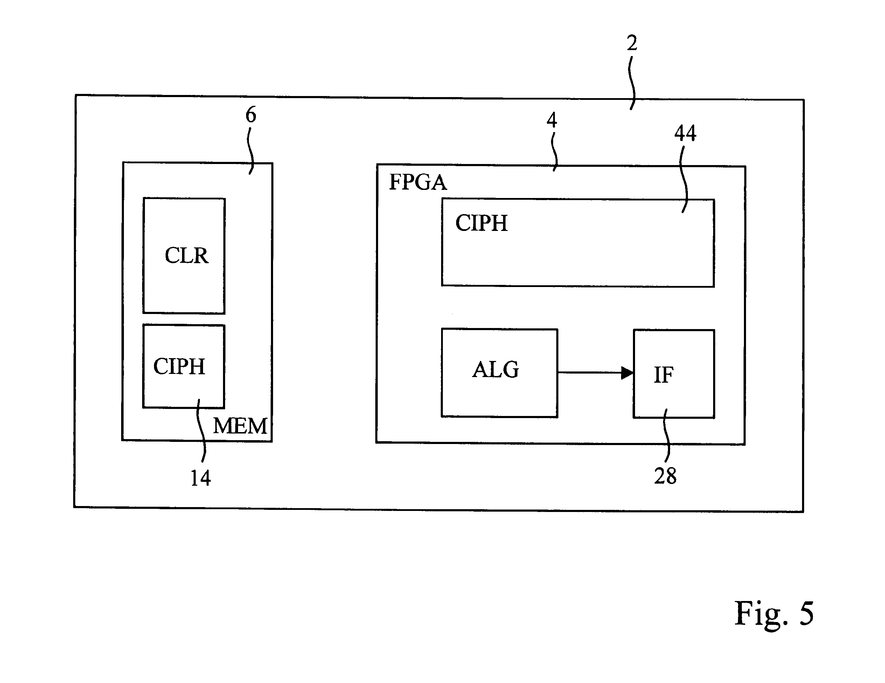

Fig. 5 zeigt die Vorrichtung 2 gemäß Fig. 1 mit einem in der Logikschaltung 4 vorgesehenen Baustein 44, dessen innere Verschaltung von in Fig. 5 nicht dargestellten, im Baustein 44 angeordneten Schaltzellen mittels der entschlüsselten Konfigurationsdaten 14, welche in der Konfigurationsspeichereinrichtung 6 als verschlüsselte Konfigurationsdaten 14 gespeichert sind, konfiguriert wurde. Durch die Trennung des Baustein 44 von der internen Schnittstelle 28, ist ein Zugriff von außerhalb der Logikschaltung über die logikschaltungsexterne Ladeschnittstelle (Fig. 4) und über die Schlüsselschnittstelle (Fig. 3) unterbindbar. Der Baustein 44, welcher lediglich durch Schaltung der logikschaltungsinternen Schnittstelle 28 zugänglich gemacht werden kann, stellt also den geschützten Teil der Logikschaltung 4 dar.

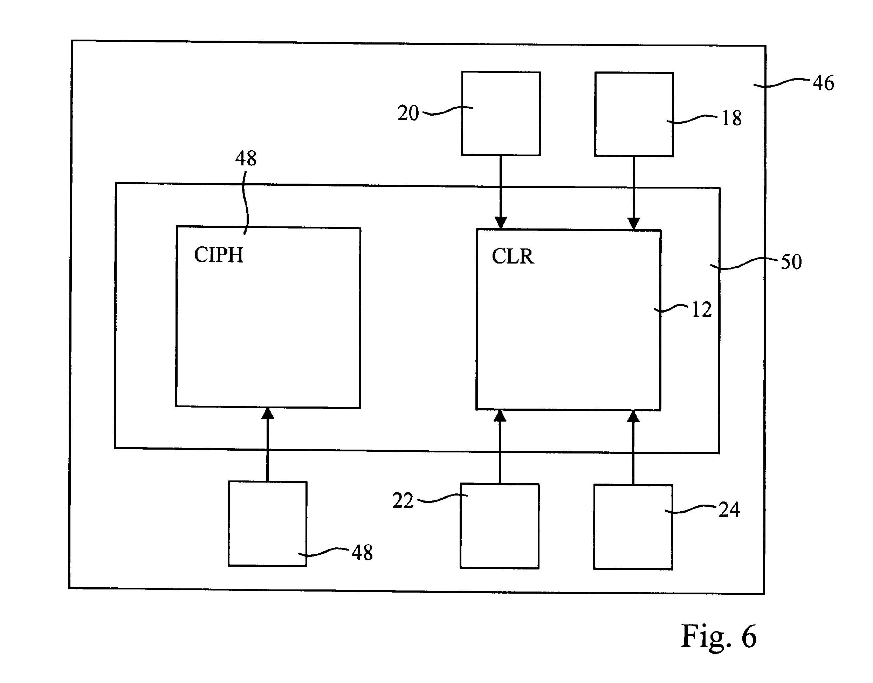

Die Figuren 6 bis 9 zeigen die einzelnen Verfahrensschritte des erfindungsgemäßen Verfahrens zur Erzeugung von für die programmierbare, integrierte Logikschaltung (Figuren 1 bis 5) vorgesehenen Konfigurationsdaten (12,14).

Dabei zeigt Fig. 6 in Prinzipdarstellung ein Erzeugungsmodul 46. Mit dem Erzeugungsmodul 46, welches auch aus Kompatibilitätsgründen vorzugsweise vom Hardware-Hersteller der Logikschaltung (Figuren 1 bis 5) mitgeliefert ist, wird die interne Verschaltung der Schaltzellen der Logikschaltung nachgebildet. Durch Programmierung von für die interne Verschaltung der Schaltzellen erforderlichen Schaltfunktionen werden zu verschlüsselnde Konfigurationsdaten 48 und die unverschlüsselten Konfigurationsdaten 12 erzeugt. Dabei umfassen die zu verschlüsselnden Konfigurationsdaten 48 Schaltfunktionen zweckmäßigerweise zur partiellen Konfiguration der Logikschaltung (Figuren 1 bis 5), insbesondere des in der Logikschaltung vorgesehenen Bausteins (Fig. 5).

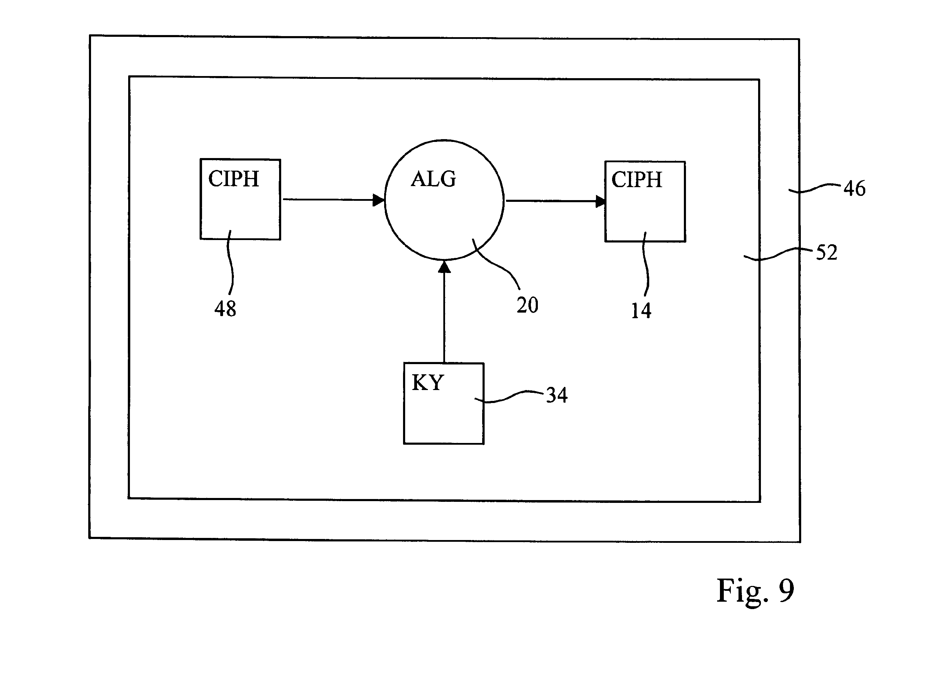

Die unverschlüsselten Konfigurationsdaten 12 umfassen die Startanweisungen 18, womit die Logikschaltung hochgefahren wird, den Algorithmus 20 zur Entschlüsselung der verschlüsselten Konfigurationsdaten 14, die Befehle 22 zur Schaltung der logikschaltungsinternen Schnittstelle (Fig. 4) und die Schlüsselanweisungen 24 zur Schaltung der logikschaltungsexternen Schlüsselschnittstelle (Fig. 3). Separat wird der zum Algorithmus 20 passende Schlüssel erzeugt (Fig. 9). Die unverschlüsselten Konfigurationsdaten 12 und die zu verschlüsselnden Konfigurationsdaten 48 werden im Erzeugungsmodul 46 generiert und in einem im Erzeugungsmodul 46 vorgesehenen Konfigurationsdatensatz 50 abgelegt.

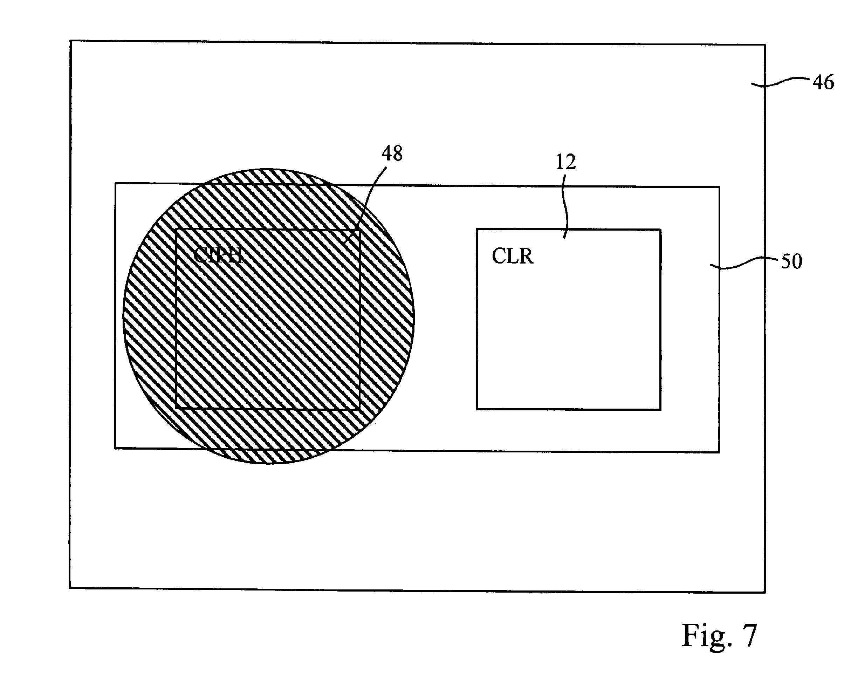

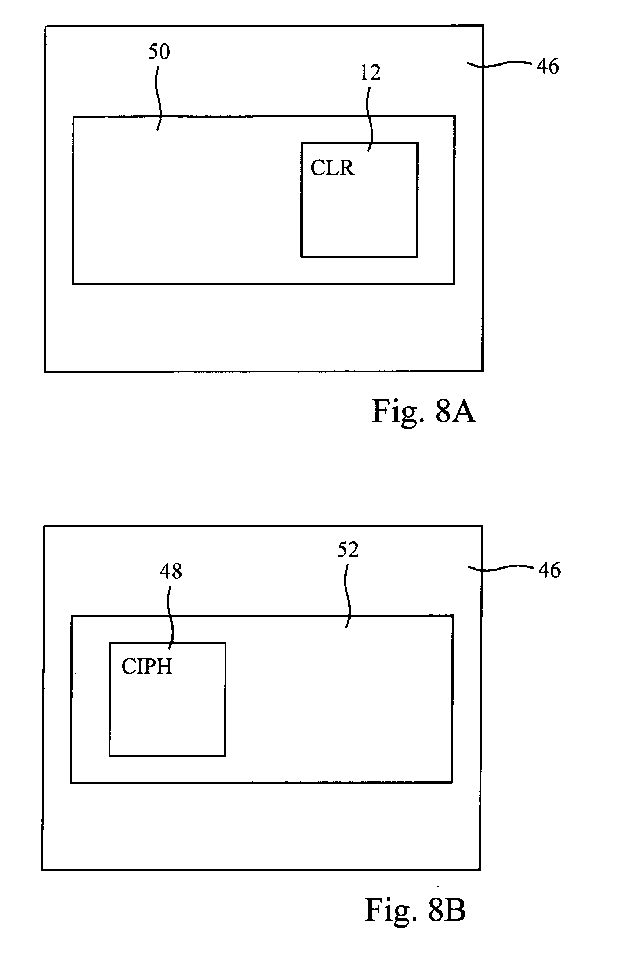

In den Figuren 7, 8A und 8B ist die Trennung der unverschlüsselten Konfigurationsdaten 12 von den zu verschlüsselnden Konfigurationsdaten 48 gezeigt. Dazu werden, wie in Fig. 7 dargestellt, die zu verschlüsselnden Konfigurationsdaten 48 im Konfigurationsdatensatz 50 des Erzeugungsmoduls 46 gelöscht und in einen neuen, im Erzeugungsmodul 46 generierten Konfigurationsdatensatz 52 eingefügt (Fig. 8B). Die unverschlüsselten Konfigurationsdaten 12 bleiben im Konfigurationsdatensatz 50 des Erzeugungsmoduls 46 zurück (Fig. 8A).

Fig. 9 zeigt die Verschlüsselung der zu verschlüsselnden Konfigurationsdaten 48. Dazu werden die im Konfigurationsdatensatz 52 abgelegten, zu verschlüsselnden Konfigurationsdaten 48 mit dem Algorithmus 20, welcher durch den zu diesem passenden Schlüssel 34 aktiviert ist, verschlüsselt und als verschlüsselte Konfigurationsdaten 14 wieder im Konfigurationsdatensatz 52 abgelegt. Im Ausführungsbeispiel wird zur Verschlüsselung der zu verschlüsselnden Konfigurationsdaten 48 und zur Entschlüsselung der verschlüsselten Konfigurationsdaten 14 derselbe Schlüssel 34 verwendet. Es ist durchaus zweckmäßig zur Verschlüsselung und zur Entschlüsselung verschiedene Schlüssel zu verwenden, welche zum Algorithmus 20 passend generiert sind. Nach der Erzeugung der unverschlüsselten Konfigurationsdaten 12 und der verschlüsselten Konfigurationsdaten 14 sowie des Schlüssels 34 werden diese zweckmäßigerweise in der Konfigurationsspeichereinrichtung (Fig. 1) bzw. in der vorzugsweise separat zur Konfigurationsspeichereinrichtung vorgesehen Schlüsselspeichereinrichtung (Fig. 3) gespeichert.

## Patentansprüche

1. Verfahren zum Zuführen von verschlüsselten Konfigurationsdaten (14) in eine programmierbare, integrierte Logikschaltung (4),
wobei unverschlüsselte Konfigurationsdaten (12) der Logikschaltung (4) zugeführt werden,
und wobei verschlüsselte Konfigurationsdaten (14) in die Logikschaltung (4) geladen, mittels eines Algorithmus (20) und eines Schlüssels (34) zur Aktivierung des Algorithmus (20) entschlüsselt werden und logikschaltungsintern abgelegt werden,
**dadurch gekennzeichnet,**
**dass** die unverschlüsselten Konfigurationdaten (12) den Algorithmus (20) umfassen und
der Schlüssel (34) der Logikschaltung (4) logikschaltungsextern und separat zu den verschlüsselten Konfigurationsdaten (14) und den unverschlüsselten Konfigurationsdaten (12) zugeführt wird.

2. Verfahren nach Anspruch 1,
**dadurch gekennzeichnet,**
**dass** die Logikschaltung (4) mittels Startanweisungen (18) hochgefahren wird, welche in den unverschlüsselten Konfigurationsdaten (12) hinterlegt sind.

3. Verfahren nach Anspruch 1 oder 2,
**dadurch gekennzeichnet,**
**dass** mittels Schlüsselanweisungen (24), welche in den unverschlüsselten Konfigurationsdaten (12) hinterlegt sind, eine logikschaltungsexterne Schlüsselschnittstelle (30) für die Zuführung des Schlüssels (34) geschaltet wird.

4. Verfahren nach einem der Ansprüche 1 bis 3,
**dadurch gekennzeichnet,**
**dass** der Schlüssel (34) dem Algorithmus (20) lediglich für den Zeitraum der Entschlüsselung der verschlüsselten Konfigurationsdaten (14) zur Verfügung gestellt wird.

5. Verfahren nach einem der Ansprüche 1 bis 4,
**dadurch gekennzeichnet,**
**dass** eine logikschaltungsinterne Schnittstelle (28) zum Ablegen der entschlüsselten Konfigurationsdaten (14) in der Logikschaltung (4) mittels Befehlen (22) geschaltet wird, welche in den unverschlüsselten Konfigurationsdaten (12) hinterlegt sind.

6. Verfahren nach einem der Ansprüche 1 bis 5,
**dadurch gekennzeichnet,**
**dass** die Logikschaltung (4) mit den entschlüsselten Konfigurationsdaten (14) zumindest teilweise konfiguriert wird.

7. Vorrichtung (2) zum Zuführen von verschlüsselten Konfigurationsdaten (14) in eine programmierbare, integrierte Logikschaltung (4), mit
einer Ladeschnittstelle (10), worüber die verschlüsselten Konfigurationsdaten (14) und unverschlüsselte Konfigurationsdaten (12) der Logikschaltung (4) zuführbar sind,
einer logikschaltungsinterne Schnittstelle (28) worüber die mittels eines Algorithmus (20) entschlüsselten Konfigurationsdaten (14) logikschaltungsintern abgelegt werden,
**dadurch gekennzeichnet,**
**dass** die unverschlüsselten Konfigurationsdaten (12) einen Algorithmus (20) zur Entschlüsselung der verschlüsselten Konfigurationsdaten (14) umfassen und
**dass** eine logikschaltungsexterne Schlüsselschnittstelle (30) zur Zuführung eines Schlüssels (34) zur Aktivierung des Algorithmus (20) vorhanden ist.

8. Vorrichtung nach Anspruch 7,
**gekennzeichnet durch**
eine Konfigurationsspeichereinrichtung (6) zum Ablegen der verschlüsselten Konfigurationsdaten (14) und/oder der unverschlüsselten Konfigurationsdaten (12).

9. Vorrichtung nach Anspruch 8,
**dadurch gekennzeichnet,**
**dass** die Konfigurationsspeichereinrichtung (6) als Tabellenspeicher, insbesondere als programmierbarer Auslesespeicher, ausgeführt ist.

10. Vorrichtung nach einem der Ansprüche 7 bis 9,
**dadurch gekennzeichnet,**
**dass** die unverschlüsselten Konfigurationsdaten (12) Startanweisungen (18) zum Hochfahren der Logikschaltung (4) umfassen.

11. Vorrichtung nach einem der Ansprüche 7 bis 10,
**gekennzeichnet durch**
eine Schlüsselspeichereinrichtung (32), worauf der Schlüssel (34) abgelegt ist und welche mit der logikschaltungsexternen Schlüsselschnittstelle (30) zur Zuführung des Schlüssels (34) koppelbar ist.

12. Vorrichtung nach Anspruch 11,
**dadurch gekennzeichnet,**
**dass** die Schlüsselspeichereinrichtung (32) löschbar ausgebildet ist.

13. Vorrichtung nach einem der Ansprüche 7 bis 12,
**dadurch gekennzeichnet,**
**dass** die Logikschaltung (4) als frei programmierbare Logikschaltung (FPGA) ausgeführt ist.

14. Vorrichtung nach einem der Ansprüche 7 bis 13,
**dadurch gekennzeichnet,**
**dass** die unverschlüsselten Konfigurationsdaten (12) Schlüsselanweisungen (24) zur Schaltung der logikschaltungsexternen Schlüsselschnittstelle (30) umfassen.

15. Vorrichtung nach einem der Ansprüche 7 bis 14,
**dadurch gekennzeichnet,**
**dass** die unverschlüsselten Konfigurationsdaten (12) Befehle (22) zur Schaltung der logikschaltungsinternen Schnittstelle (28) umfassen.

16. Verfahren zum Erzeugen von für eine programmierbare, integrierte Logikschaltung (4) vorgesehenen Konfigurationsdaten (12,14),
wobei die Konfigurationsdaten (12,14) mit einem Erzeugungsmodul (46) erstellt, in zu verschlüsselnde Konfigurationsdaten (48) und unverschlüsselte, einen Algorithmus (20) zur Verschlüsselung und zur Entschlüsselung der zu verschlüsselnden Konfigurationsdaten (48) umfassende Konfigurationsdaten (12) aufgeteilt werden,
wobei ein zur Aktivierung des Algorithmus (20) passender Schlüssel (34) bestimmt wird,
wobei die zu verschlüsselnden Konfigurationsdaten (48) mittels des Algorithmus (20) verschlüsselt werden, und wobei die verschlüsselten Konfigurationsdaten und die unverschlüsselten Konfigurationsdaten (12) sowie der Schlüssel (34) getrennt von den verschlüsselten Konfigurationsdaten (14) und den unverschlüsselten Konfigurationsdaten (12) logikschaltungsextern abgelegt werden.

17. Verfahren nach Anspruch 16,
**dadurch gekennzeichnet,**
**dass** die verschlüsselten Konfigurationsdaten (14) und/oder die unverschlüsselten Konfigurationsdaten (12) auf einer oder mehreren Konfigurationsspeichereinrichtungen (6), welcher von der Logikschaltung (4) physikalisch getrennt sind, abgelegt werden.

18. Digitales Speichermedium mit elektronisch auslesbaren Steuersignalen, welche derart mit einem programmierbaren Computer oder digitalen Signalprozessor zusammenwirken können, dass ein Verfahren nach einem der Ansprüche 1 bis 6, 16 oder 17 ausgeführt wird.

19. Computerprogramm mit Programmcode-Mitteln zur Durchführung eines Verfahrens nach einem der Ansprüche 1 bis 6, 16 oder 17, wenn das Computerprogramm in einem Computer oder einem digitalen Signalprozessor ausgeführt wird.

20. Computerprogramm mit Programmcode-Mitteln, zur Durchführung aller Schritte nach einem der Ansprüche 1 bis 6, 16 oder 17, wenn das Computerprogramm auf einem maschinenlesbaren Träger gespeichert ist.

21. Computerprogramm-Produkt mit auf maschinenlesbaren Datenträger gespeicherten Programmcode-Mitteln, zur Durchführung eines Verfahrens nach einem der Ansprüche 1 bis 6, 16 oder 17, wenn das Computerprogramm-Produkt in einem Computer oder einem digitalen Signalprozessor ausgeführt wird.

## Claims

1. Method for supplying encoded configuration data (14) to a programmable, integrated logic circuit (4),
wherein un-encoded configuration data (12) are supplied to the logic circuit (4),
and wherein the encoded configuration data (14) are loaded into the logic circuit (4), decoded by means of an algorithm (20) and a key (34) for the activation of the algorithm (20), and stored logic-circuit-internally,
**characterised in that**
the un-encoded configuration data (12) comprise the algorithm (20) and the key (34) is supplied to the logic circuit (4) logic-circuit-externally and separately from the encoded configuration data (14) and from the un-encoded configuration data (12).

2. Method according to claim 1,
**characterised in that**
the logic circuit (4) is booted by means of start-up instructions (18), which are deposited in the un-encoded configuration data (12).

3. Method according to claim 1 or 2,
**characterised in that**
a logic-circuit-external key interface (30) for the supply of the key (34) is connected by means of key instructions (24), which are deposited in the un-encoded configuration data (12).

4. Method according to any one of claims 1 to 3,
**characterised in that**
the key (34) is provided to the algorithm (20) only for the period of the decoding of the encoded configuration data (14).

5. Method according to any one of claims 1 to 4,
**characterised in that**
a logic-circuit-internal interface (28) for the storage of the decoded configuration data (14) in the logic circuit (4) is connected by means of commands (22), which are deposited in the un-encoded configuration data (12).

6. Method according to any one of claims 1 to 5,
**characterised in that**
the logic circuit (4) is at least partially configured with the encoded configuration data (14).

7. Device (2) for the supply of encoded configuration data (14) to a programmable, integrated logic circuit (4), with a loading interface (10), across which the encoded configuration data (14) and un-encoded configuration data (12) can be supplied to the logic circuit (4),
a logic-circuit-internal interface (28), across which the configuration data (14) decoded by means of the algorithm (20) are stored logic-circuit-internally,
**characterised in that**
the un-encoded configuration data (12)comprise an algorithm (20) for the decoding of the encoded configuration data (14) and that
a logic-circuit-external key interface (30) is available to supply a key (34) for the activation of the algorithm (20).

8. Device according to claim 7,
**characterised by**
a configuration memory device (6) for the storage of the encoded configuration data (14) and/or of the un-encoded configuration data (12).

9. Device according to claim 8,
**characterised in that**
the configuration memory device (6) is designed as a tabular memory, in particular, as a programmable readout memory.

10. Device according to any one of claims 7 to 9,
**characterised in that**
the un-encoded configuration data (12) comprise start-up instructions (18) for booting the logic circuit (4).

11. Device according to any one of claims 7 to 10,
**characterised by**
a key memory device (32), in which the key (34) is stored and which can be coupled with the logic-circuit-external key interface (30) for the supply of the key (34).

12. Device according to claim 11,
**characterised in that**
the key memory device (32) is designed to be deletable.

13. Device according to any one of claims 7 to 12,
**characterised in that**
the logic circuit (4) is designed as a freely-programmable logic circuit (FPGA).

14. Device according to any one of claims 7 to 13,
**characterised in that**
the un-coded configuration data (12) comprise key instructions (24) for the connection of the logic-circuit-external key interface (30).

15. Device according to any one of claims 7 to 14,
**characterised in that**
the un-encoded configuration data (12) comprise commands (22) for the connection of the logic-circuit-internal interface (28).

16. Method for the generation of configuration data (12, 14) provided for a programmable, integrated logic circuit (4),
wherein the configuration data (12, 14) are prepared with a generating module (46) and subdivided into configuration data (48) to be encoded, and un-encoded configuration data (12) comprising an algorithm (20) for the encoding and for the decoding of the configuration data (48) to be encoded,
wherein a key (34) suitable for the activation of the algorithm (20) is determined,
wherein the configuration data (48) to be encoded are encoded by means of the algorithm (20), and wherein the encoded configuration data and the un-encoded configuration data (12) and the key (34) are stored separately from the encoded configuration data (14) and the un-encoded configuration data (12) logic-circuit-externally.

17. Method according to claim 16,
**characterised in that**
the encoded configuration data (14) and/or the un-encoded configuration data (12) are stored in one or more configuration memory devices (6), which are physically separate from the logic circuit (4).

18. Digital storage medium with electronically-readable control signals, which can cooperate in such a manner with a programmable computer or digital signal processor that a method according to any one of claims 1 to 6, 16 or 17 is executed.

19. Computer program with program-code means for the implementation of a method according to any one of claims 1 to 6, 16 or 17, when the computer program is executed in a computer or a digital signal processor.

20. Computer program with program-code means, for the implementation of all of the steps according to any one of claims 1 to 6, 16 or 17, wherein the computer program is stored on a machine-readable medium.

21. Computer-software product with program-code means stored on machine-readable data media, for the implementation of a method according to any one of claims 1 to 6, 16 or 17, wherein the computer-software product is executed in a computer or a digital signal processor.

## Revendications

1. Procédé pour délivrer des données de configuration cryptées (14) dans un circuit logique intégré programmable (4),
dans lequel les données de configuration non cryptées (12) sont délivrées au circuit logique (4),
et dans lequel des données de configuration cryptées (14) sont chargées dans le circuit logique (4), sont décryptés grâce à un algorithme (20) et à une clé (34) en vue de l'activation de l'algorithme (20) et sont mémorisées à l'intérieur du circuit logique,
**caractérisé en ce que**
les données de configuration non cryptées (12) comprennent l'algorithme (20) et
la clé (34) du circuit logique (4) est délivrée hors du circuit logique et séparée des données de configuration cryptées (14) et des données de configuration non cryptées (12).

2. Procédé selon la revendication 1, **caractérisé en ce que**
le circuit logique (4) est fait fonctionner grâce à des instructions de démarrage (18), qui sont enregistrées dans les données de configuration non cryptées (12).

3. Procédé selon la revendication 1 ou 2, **caractérisé en ce que**
une interface à clé hors du circuit logique (30) est montée pour la délivrance de la clé (34) grâce aux instructions de clé (24), qui sont enregistrées dans les données de configuration non cryptées (12).

4. Procédé selon l'une des revendications 1 à 3, **caractérisé en ce que**
la clé (34) est mise à disposition de l'algorithme (20) seulement pour l'intervalle du décryptage des données de configuration cryptées (14).

5. Procédé selon l'une des revendications 1 à 4, **caractérisé en ce que**
une interface dans le circuit logique (28) en vue de la mémorisation des données de configuration décryptées (14) est montée dans le circuit logique (4) au moyen d'instructions (22), qui sont enregistrées dans les données de configuration non cryptées (12).

6. Procédé selon l'une des revendications 1 à 5, **caractérisé en ce que**
le circuit logique (4) est configuré au moins partiellement avec des données de configuration décryptées (14).

7. Dispositif (2) pour délivrer des données de configuration cryptées (14) à un circuit logique intégré programmable (4), comportant
une interface de charge (10), par l'intermédiaire de laquelle les données de configuration cryptées (14) et les données de configuration non cryptées (12) peuvent être délivrées au circuit logique (4),
une interface dans le circuit logique (28) par l'intermédiaire de laquelle les données de configuration (14) décryptées au moyen d'un algorithme (20) sont mémorisées dans le circuit logique,
**caractérisé en ce que**
les données de configuration non cryptées (12) comprennent un algorithme (20) en vue du décryptage des données de configuration cryptées (14) et
**en ce qu'**une interface à clé hors du circuit logique (30) est disponible pour délivrer une clé (34) en vue de l'activation de l'algorithme (20).

8. Dispositif selon la revendication 7, **caractérisé par**
un dispositif de mémoire de configuration (6) pour mémoriser les données de configuration cryptées (14) et/ou les données de configuration non cryptées (12).

9. Dispositif selon la revendication 8, **caractérisé en ce que** le dispositif de mémorisation de configuration (6) est réalisé sous la forme d'une mémoire de table, en particulier en tant que mémoire morte programmable.

10. Dispositif selon l'une des revendications 7 à 9, **caractérisé en ce que**
les données de configuration non cryptées (12) comportent des instructions de démarrage (18) pour faire fonctionner le circuit logique (4).

11. Dispositif selon l'une des revendications 7 à 10, **caractérisé par**
un dispositif de mémoire à clé (32), dans lequel la clé (34) est mémorisée et qui peut être couplé avec l'interface à clé hors du circuit logique (30) en vue de la délivrance de la clé (34).

12. Dispositif selon la revendication 11, **caractérisé en ce que**
le dispositif de mémoire à clé (32) est réalisé effaçable.

13. Dispositif selon l'une des revendications 7 à 12, **caractérisé en ce que**
le circuit logique (4) est réalisé en tant que circuit logique librement programmable (FPGA).

14. Dispositif selon l'une des revendications 7 à 13, **caractérisé en ce que**
les données de configuration non cryptées (12) comprennent des instructions à clé (24) pour le montage de l'interface à clé hors du circuit logique (30).

15. Dispositif selon l'une des revendications 7 à 14, **caractérisé en ce que**
les données de configuration non cryptées (12) comprennent des instructions (22) en vue du montage de l'interface dans le circuit logique (28).

16. Procédé pour générer des données de configuration (12, 14) prévues pour un circuit logique intégré programmable (4),
dans lequel les données de configuration (12, 14) sont générées avec un module de génération (46), sont réparties en données de configuration à crypter (48) et en données de configuration non cryptées (12) comportant un algorithme (20) pour le cryptage et le décryptage des données de configuration à crypter (48),
dans lequel une clé (34) adaptée pour activer l'algorithme (20) est déterminée,
dans lequel les données de configuration à crypter (48) sont cryptées grâce à l'algorithme (20), et
dans lequel les données de configuration cryptées et les données de configuration non cryptées (12) ainsi que la clé (34) sont mémorisées hors du circuit logique indépendamment des données de configuration cryptées (14) et des données de configuration non cryptées (12).

17. Procédé selon la revendication 16, **caractérisé en ce que**
les données de configuration cryptées (14) et/ou les données de configuration non cryptées (12) sont mémorisées dans un ou plusieurs dispositifs de mémoire de configuration (6) qui sont indépendants physiquement du circuit logique (4).

18. Support de mémoire numérique comportant des signaux de commande pouvant être lus électroniquement, qui peuvent agir conjointement avec un ordinateur programmable ou un processeur de signal numérique de sorte qu'un procédé selon l'une des revendications 1 à 6, 16 ou 17 est mis en oeuvre.

19. Programme informatique comportant des moyens de code de programme pour effectuer un procédé selon l'une des revendications 1 à 6, 16 ou 17, lorsque le programme informatique est mis en oeuvre dans un ordinateur ou un processeur de signal numérique.

20. Programme informatique comportant des moyens de code de programme, pour effectuer toutes les étapes selon l'une des revendications 1 à 6, 16 ou 17, lorsque le programme informatique est mémorisé sur un support pouvant être lu par une machine.

21. Produit de programme informatique comportant des moyens de code de programme mémorisés sur un support de données pouvant être lu par une machine, en vue de l'exécution d'un procédé selon l'une des revendications 1 à 6, 16 ou 17, lorsque le produit de programme informatique est mis en oeuvre dans un ordinateur ou un processeur de signal numérique.
